# EUROPEAN PATENT APPLICATION

(11) **EP 4 059 641 A1**
(43) Date of publication of application: **21.09.2022**
(21) Application number: 21163379.7
(22) Date of filing: 18.03.2021
(51) Int. Cl.: B22F 10/80, G06F 30/23

(54) **SIMULATION OF SOLIDIFICATION AND GRAIN STRUCTURE IN POWDER-BED FUSION ADDITIVE MANUFACTURING**

(71) Applicant: Siemens Energy Global GmbH & Co. KG, 81739 München (DE); UNIVERSITY OF WATERLOO, Waterloo, Ontario N2L 3G1 (CA)
(72) Inventor: Bonakdar, Ali, Nun's Island (Montreal), H3E2B7 (CA); Keshavarzkermani, Ali, Nun's Island (Montreal), H3E2B7 (CA); Toyserkani, Ehsan, Waterloo, N2V 0E7 (CA)
(74) Representative: Roth, Thomas

(57) **Abstract**

A method of simulating solidification of a build material (1) in a powder-bed-based additive manufacturing is presented. The method comprises applying a finite element model (FE) to calculate an initial thermal gradient (ΔT) and a melt pool (M) geometry in the build material (1), and applying a phase-field model (PF) being coupled to a modelling of a thermal gradient further evolving in the build material (1), wherein the phase field model (PF) simulates, (i), a structural grain formation (g) in the build material (1) out of a melt pool (M) created by a single track (T) irradiation and, (ii), re-melting of a structure (10) of the build material (1) created from a plurality of irradiation tracks (Tₙ). Moreover, a related computer program product (CP) and a related apparatus are presented.

## Description

Additive manufacturing (AM) or 3D-printing techniques comprise e.g. powder-bed-fusion methods, such as selective laser melting (SLM) or laser powder bed fusion (LPBF), selective laser sintering (SLS) and electron beam melting (EBM).

Additive manufacturing, particularly powder-bed methods have proven to be useful and advantageous in the fabrication of prototypes or complex components, such as components with filigree structure or functionally cooled components. Further, the additive manufacture stands out for its short chain of process steps which in turn enables material economization and a particularly low lead time.

Related apparatuses or setups for such methods usually comprise a manufacturing or build platform on which the component to be manufactured is built layer-by-layer after the feeding of a layer of base material which may then be melted, e.g. by an energy beam, such as a laser, and subsequently solidified. The layer thickness is determined by a recoater that moves, e.g. automatically, over the powder bed and removes excess material from a manufacturing plane or build space. Typical layer thicknesses amount to between 20 µm and 40 µm. During the manufacture, said energy beam scans over the surface and melts the powder on selected areas which may be predetermined by a CAD-file according to the geometry of the component to be manufactured. Said scanning or irradiation is preferably carried out in a computer implemented way or via computer aided means, such as Computer-Aided-Manufacturing (CAM) instructions, which may be present in the form of a dataset. Said dataset or CAM-file may be or refer to a computer program or computer program product.

As there are lots of new potential materials which can be used for laser powder-bed fusion (LPBF), a decent understanding of the as-built microstructure is required to endow the related component with the desired physical and mechanical properties. To this end, a set of process parameters is usually developed in order to "print" the parts followed by related microstructural analyses which are complex, expensive and time consuming.

On the other hand, it is sometimes difficult or even impossible to reach the required properties as there is no observation or sufficient understanding and predictability of the solidification process and structure formation during the buildup operation. For example, it is well known that a fine grain structure usually results in greater mechanical strength. However, a fine grain structure also requires a good understanding of grain growth behavior during solidification. Conducting experimental analysis will only result in understanding of the final microstructure, without necessarily knowing the physical principles and nucleation kinetics behind. Consequently, solidification simulation of the process is a stringent demand in order to get better insights into the formation of grain morphology and the principles of competitive grain growth, such as liquid-to-solid phase transformation.

Recently, attempts have been conducted to simulate the microstructure of LPBF-manufactured parts. There are e.g. modelling approaches of phase-field simulations, cellular automata, and Monte Carlo methods which can be utilized to predict the microstructure. The phase-field simulation includes plenty of physics during the modelled solidification process which make a result depicting reality quite close. However, this method is often difficult to apply because of the complex and computationally expensive involvement of "multi-physics". Therefore, related literature mostly predicts grain structure in a very narrow parameter "window" as compared to an actual or representative microstructure obtainable in the given processes (cf. references [1] to [5] below.

As mentioned, there are other techniques (like Monte Carlo or cellular Automata) which can simulate the microstructure of the solidified part. However, phase-field models are more accurate due to involvement of the actual physics behind the problem. To predict the microstructure, it is also common to build extensive 3D printed structures and section them followed by regular metallography and e.g. (scanning electron microscopy) SEM-analysis. This may as well provide for a map for microstructural prediction although requiring lots of experiment.

It is, thus, an object of the present invention to provide a far improved simulation methodology for powder-bed-based additive manufacturing.

The mentioned object is achieved by the subject-matters of the independent claims. Advantageous embodiments are subject-matters of the dependent claims.

An aspect of the present invention relates to a method of simulating solidification and/or grain structure evolvement of a build material in or during a powder-bed-based additive manufacturing process, such as LPBF.

The method comprises applying a finite element model to calculate an initial thermal gradient, such as in a thermal simulation, and melt pool geometry in the build material during the process. In other words, an initial computational domain for the simulation may be defined, wherein the domain that contains or comprises melt pool information, material type, surrounding substrate and e.g. and ambient atmosphere, are taken into account.

The computational domain may refer to a simplified form of the actual physical domain both in terms of geometrical representation and boundary condition imposition.

The method further comprises applying a phase field model being coupled or superimposed to a modelling of a (simulated) thermal gradient further evolving in the build material, wherein the phase field model simulates a structural grain formation (microstructural modelling) in the build material out of a, e.g. modelled or simulated, melt pool created by a single track irradiation and, remelting of a solidified structure of the build material created from a plurality (multi-track) of irradiation tracks.

Thereby, as described herein, phase-field modelling approaches can, advantageously, essentially be improved, and a related result be depicted closer to reality. In turn, this may significantly improve the understanding and implementation of the related (physical) manufacturing processes.

In an embodiment the finite element model applied to calculate the initial thermal gradient and melt pool geometry is a three-dimensional microscale model.

In an embodiment the initial thermal gradient is calculated from a thermal simulation, such as a (quasi) three-dimensional simulation, of a cross-section, such as taken perpendicular to an irradiation track direction of the heat source with the build material. In this regard the heat source may relate to an energy beam used as the welding beam during the related additive manufacturing job.

In an embodiment the heat source simulation is imported to the phase field model as an input to the (solidification) simulation.

In an embodiment the phase field model is coupled to the thermal gradient modelling in order to simulate competitive grain growth in the final grain structure, such as after complete solidification of the base material.

In an embodiment the phase field model comprises - after the remelting simulation - simulating a microstructure of the build material from a plurality of layers comprising a plurality of irradiation tracks stacked or scanned one upon the other. In this regard, tracks are represented stacked on top of each other in order to emulate the final microstructure for the related component.

In an embodiment the method of simulating is a transient analysis, wherein e.g. an intermediate status of the build material is updated or renewed every track or layer in order to build up or predict a final or steady-state of the microstructure from a plurality of transient or non-equilibrium states.

A further aspect of the present invention relates to a computer program or computer program product, comprising instructions which, when the program is executed by a computer, data processing device or build processor, cause said means to carry out the method as described.

A computer program product as referred to herein may relate to a computer program means media constituting or comprising a computer-readable storage medium (be it volatile and nonvolatile) like a memory card, a USB stick, a CD-ROM, a DVD or a file downloaded or downloadable from a server or network. Such product may be provided by a wireless communication network or via transfer of the corresponding information by the given computer program, computer program product or the like. A computer program product may include or be included by a (non-transitory) computer-readable storage medium storing applications, programs, program modules, scripts, source code, program code, object code, byte code, compiled code, interpreted code, machine code, executable instructions, and/or the like.

A further aspect of the present invention relates to an apparatus, such as being or comprising a computer, data processing device or build processor, as mentioned.

Advantages and embodiments relating to the described method may as well pertain or be valid with regard to the computer program, and vice versa.

Further features, expediencies and advantageous embodiments become apparent from the following description of the exemplary embodiment in connection with the Figures.
Figure 1 indicates, in a sectional view, basic principles of a powder-bed-based additive manufacturing process.
Figure 2 shows a simplified flowchart indicating method steps of the present invention.
Figure 3 indicates, in a simplified sketch, modelling of scanning tracks and subsequent layers of an additively manufactured structure.
Figure 4 indicates, in a simplified sketch, a (modelled) grain structure of an additively manufactured component.
Figure 5 indicates, analogous to Figure 4, a simulation result of a (modelled) grain structure.
Figure 6 indicates an experimental result of the grain structure as shown in Figure 5.

Like elements, elements of the same kind and identically acting elements may be provided with the same reference numerals in the figures. The Figures are not necessarily depicted true to scale and may be scaled up or down to allow for a better understanding of the illustrated principles. Rather, the described Figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

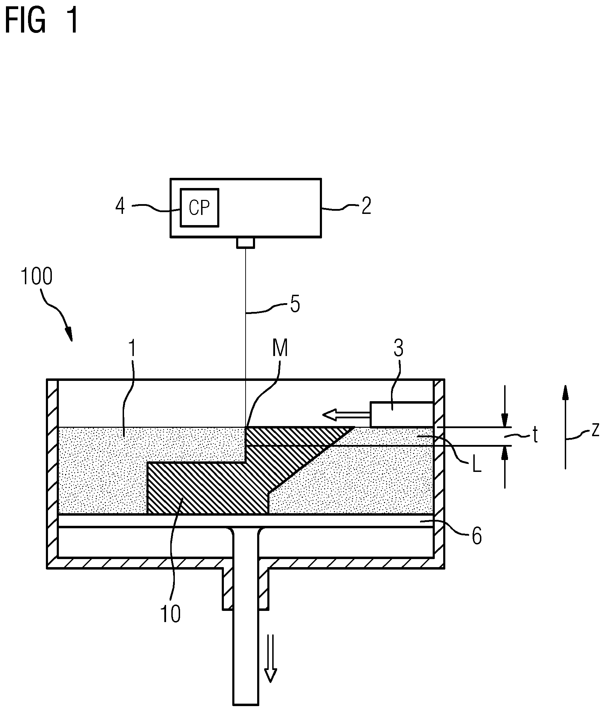

Figure 1 shows an additive manufacturing device 100. Said device 100 may be a conventional device for manufacturing a structure or component 10 by powder-bed-fusion. Such techniques employ a bed of a powder or build material 1 which is selectively exposed to or irradiated by a focused energy beam 5, such as a laser or an electron beam, of an irradiation apparatus 2. At the laser focus, the energy of the beam 5 effectuates a localized melt pool M in the build material 1. In accordance with a scanning path of said beam 5, the build material 1 is then subsequently solidified in various tracks (cf. Tₙ below) per layer and, in turn, various layers (cf. Lₙ below) for the whole structure of the component 10.

Accordingly, the given method preferably relates to selective laser sintering, selective laser melting or electron beam melting. Said processes feature that the component 10 is established or build up on top of a build platform 6 in a layerwise manner. In other words, the component 10 is fused or welded onto said platform 1 and consecutively established by selectively solidifying the build material 1 out of single layers according to its predefined geometry along a build direction z.

The geometry of the component 10 is usually provided in form of a CAD-file (Computer-Aided-Design). After the irradiation or fusing of each layer, the build platform 1 is usually lowered (cf. downward pointing arrow) according to the layer thickness t and a new base material layer L is deposited on a manufacturing plane, such as via a recoater 3.

The irradiation apparatus 20 is connected to or may be implemented via a computer program CP, control apparatus or processor, such as comprising a build processor, as indicated by numeral 4.

Preferably, the component 10 denotes a component of a turbo machine, e.g. applied in the flow path hardware of a gas turbine, like a sealing or liner component. The component may thus, be made of a nickel-or cobalt-based superalloy, particularly a precipitation hardened alloy. The component 10 may particularly relate to a part or an article of complex shape, such as with filigree portions of structures. Preferably, said component is, preferably, made of a high-performance material, such as a material of great strength and/or thermal resistivity. Particularly, said part may constitute a part of a steam or gas turbine component, such as a blade, vane, shroud, shield, such as heat shield, tip, segment, insert, injector, seal, transition, burner, nozzle, strainer, orifice, liner, distributor, dome, boost, cone, lance, plate, resonator, piston or any corresponding retrofit kit.

In the alternative, the component 10 may pertain to a high-performance component, such as a component applied in power generation, in the aviation or the automotive industry.

Basically, the presented methodology consists of a phase-field model coupled with modelling of a thermal gradient. The methodology applies the most significant "physics" and parameters during polycrystalline material grain growth and related solidification.

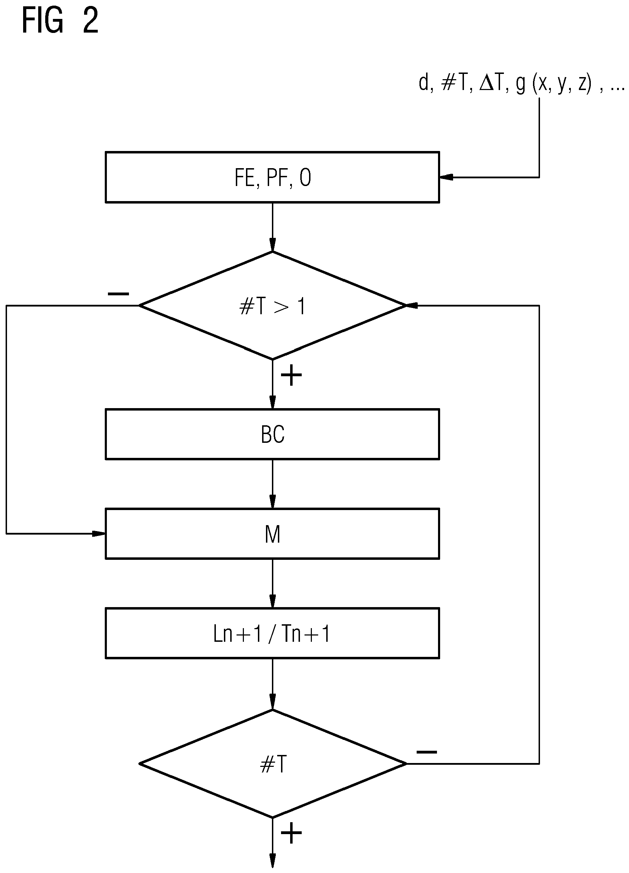

Figure 2 indicates principals of the presented method by way of a simplified flow chart.

Said method is a method of simulating solidification of a build material 1 in a powder-bed-based additive manufacturing process, comprising applying a finite element model FE to calculate an initial thermal gradient ΔT and a melt pool M geometry in the build material 1.

The method further applies a phase-field model PF being coupled to a modelling of a thermal gradient further evolving in the build material 1, wherein the phase field model PF simulates, (i), a structural grain g formation in the build material 1 out of a melt pool M created by a single track T irradiation and, (ii), remelting of a structure 10 of the build material 1 created from a plurality of irradiation tracks Tₙ.

Particularly, a three-dimensional (3D) micro-scale finite element model is employed to simulate the initial thermal gradient and melt pool geometry during an LPBF process. Then, a phase-field model coupled with thermal gradient is implemented to simulate competitive grain growth and as a result, the final grain structure after the material's complete solidification.

The term "competitive" as used herein shall mean that the presented simulation process accounts for the situation that crystals in the melt pool M tend to grow faster in a kinetically preferred (grain) growth direction, wherein said grain orientation is preferred over further orientations that compete with said preferred orientation. This "competitive grain growth" results in blocking or suppressing of "non-preferred" grains (in growth direction) and provokes a columnar microstructure.

To simulate grain growth accurately, each track's solidification needs to be simulated individually. Therefore, the initial computational domain contains e.g. melt pool parameters, surrounding substrate, and an ambient atmosphere. Random grain orientation has been assigned to single track's melt pool boundaries which are in touch with the powdery build material, such as a metal powder, while the orientation of existing grains is used for the rest of melt pool boundaries. After setting the initial condition, a phase-field model (cf. references [6] and [7]) is utilized to simulate the solidification and grain growth.

The finite element model FE is contemplated and applied to calculate the initial thermal gradient ΔT and the melt pool geometry in three-dimensions on the micro-scale.

The initial thermal gradient ΔT is further, preferably, calculated from a thermal simulation of a cross-section of a heat source 5 with the build material 1. Particularly, the thermal gradient is obtained from the 2D cross-section (perpendicular to track direction) of heat-source simulation being imported as an input to the solidification simulation. A finite-difference phase-field model with a uniform mesh size may then e.g. implemented for the solidification process. The heat source simulation may also be imported to the phase-field model PF as an input to the simulation.

Advantageously, the presented methodology allows to dispense with complex metallic graphical analyses, such as cutting, polishing and SEM-analysis. Rather the presented approach employs the phase-field model to determine the state and the development of the microstructure during the process.

The phase field model PF is preferably run or applied for every track and/or layer until all of the tracks and layers are solidified. Particularly, the related simulation will continue until the whole powdery or liquid metal is assigned to an individual grain in the solid microstructure. Thereby, advantageously, a powdery state of the build material 1, a related liquid, mushy, mixed or binary phase state (between a liquid and a fully solid state) and a fully solid state of the base material are considered in the presented transient analysis (cf. below). The described method of simulating is, thus, a transient and/or non-equilibrium (cf. above) analysis.

Consequently, the coupling of the phase-field model with the simulated thermal history during the manufacturing process advantageously allows to accurately emulate the physical process and to reliably predict the columnar grain growth and/or the microstructure in the process.

As indicated in Figure 2, an initial step of the presented methodology is the application of the finite element FE as well as the phase-field model PF. To this effect, an order parameter O may as well be considered along with any further necessary phase field parameters. Thereby also parameters like the number of tracks #T, a temperature gradient ΔT, a hatch spacing, i.e. distance d or offset between the different tracks Tₙ to be scanned and a grain or grain orientation g(x,y,z) are considered.

Subsequently, for the modelling of a plurality of tracks, as indicated by the rhomb symbol, a condition is applied in which the actual or serial number of tracks is requested to amount to a number greater than 1. If the request is positive, numeral BC shall indicate that boundary conditions are assigned to the related track or track calculation and an overlap region of the actual track (with a previously scanned model or track) are reconstructed. Said boundary conditions BC may as well comprise the domains of any powder, air or liquid phase. This allows to model the remelting of the track(s) in a transient and evolving way and hence obtaining a reliable result for the (remelted) microstructure. If the condition is negative, the arrow shall indicate that the process is continued with the actual melt pool and/or solidification simulation as mentioned above. The simulation will then continue after the boundary condition assignment as mentioned.

Subsequently, as indicated by the numerals Lₙ+1 and/or Tₙ+1, a number of serial number of tracks T and layers L is incremented, such as to model a subsequent track and/or layer. Then, a condition is applied, wherein the actual number of tracks Tₙ is requested to equal the final number of tracks #T. If the condition is positive (cf. bottom of the flowchart in Figure 2) the process flow, as sketched here, is finalized. Otherwise, (cf. bottom right in Figure 2) if the condition is negative, the process is continued with the first conditional request, as described further above.

This methodology is preferably carried out track-by-track in each layer and then layer-by-layer, until the whole structure of the component 10 - being formed by selective solidification of said tracks Tₙ and said layers Lₙ - is finalized.

More particularly, in this technical context, preferably (competitive) grain growth and/or a final grain structure of the (solid) build material 1 can be modelled for a single irradiation track. In a subsequent stage of the modelling, set grain structure and/or solidification modelling is continued for a whole layer, i.e. a multitrack simulation, accounting for the remelting which occurs by overlapping and/or stacked tracks in order to solidify said layer as a whole. In a still further stage of the modelling, even a multilayer Lₙ modelling for the whole buildup of the component 10 is realized.

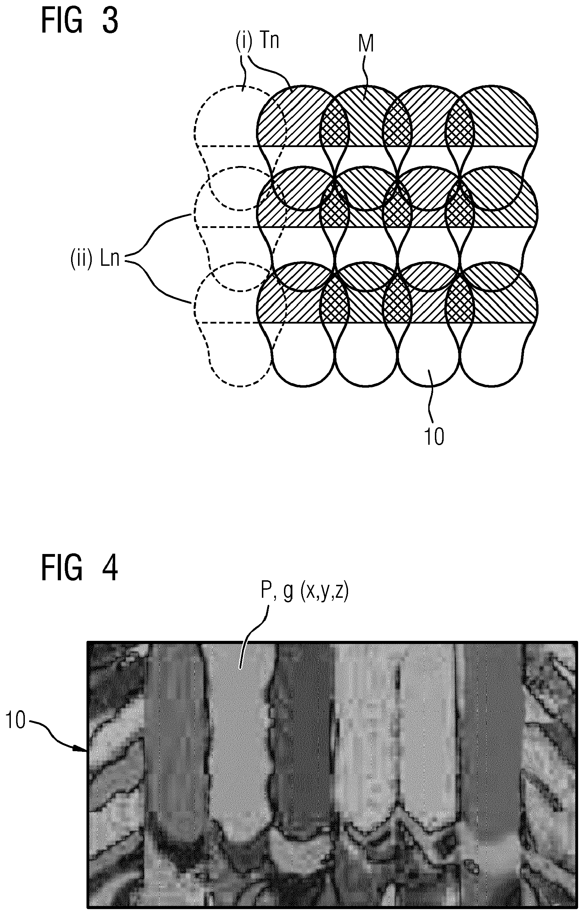

The mentioned modelling is further indicated by the cross-sectional sketch of Figure 3. Figure 3 indicates horizontally a plurality of tracks Tn which are partially overlapping so that a partial remelting of an accordingly resulting structure occurs. This is exemplified by three layers Lₙ stacked on upon the other.

Figure 4 schematically indicates an exemplary grain structure g which may result from a related modelling and/or physical manufacturing process. It is particularly indicated that the sectional view of a solid structure for the component 10 reveals a columnar or directionally solidified grain structure, as the depicted grains g - even though competing with other grain orientation in the initial stage (cf. bottom) - extend largely along a vertical (preferred) growth direction.

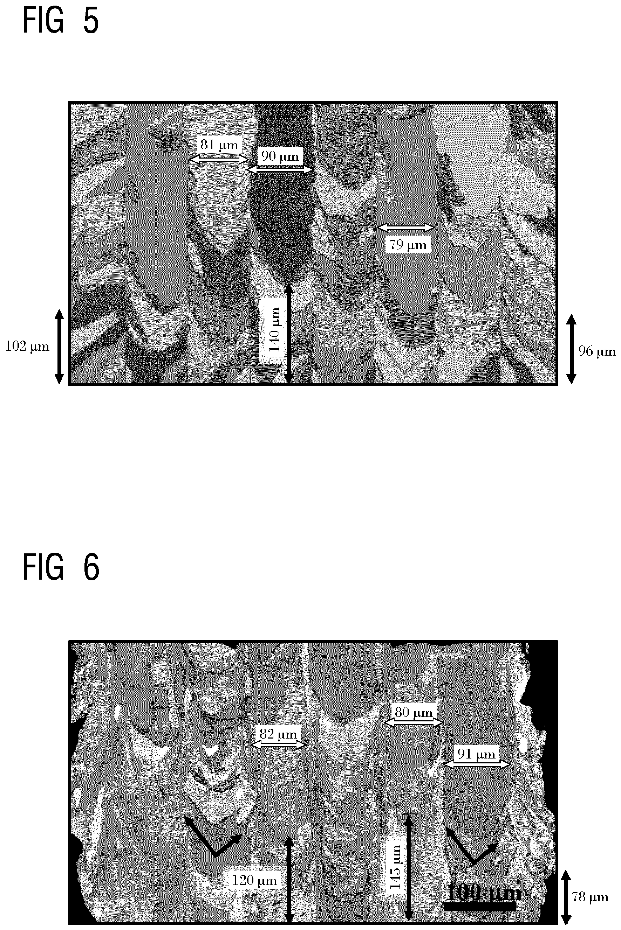

Figure 5 indicates, similar to Figure 4, an as-simulated grain structure in a sectional image as a result of the present invention. The figure gives a quantitative overview of a grain distribution as well as grain dimensions (cf. scale arrows.)

Figure 6 indicates an experimental result of the grain structure, the simulation of which was shown in Figure 5. The image of Figure 6 may be or be based on a scanning electron micrograph and/or an electron backscatter diffraction pattern. By way of a comparison of the different grain dimensions, positions and orientations in Figures 5 and 6 (cf. scale arrows indicating corresponding regions in the structure(s)) it is apparent that the presented simulation method provides very good qualitative and quantitative results. The as-manufactured structure obtained (cf. Figure 6) was particularly well predicted by the (modelled) structure as shown in Figure 5.

The presented simulation approach has, thus, been verified by experiments or analysis of a physical structure created by a single-track as well as a multi-track and/or multi-layer selective irradiation and solidification. Performance and accuracy of the presented approach has further been evaluated, verified and validated by experiments for a plurality of process parameters and build materials.

As in parts already pointed out further above, the methodology presented herein advantageously considers the most important phenomena and simplifies the complexity of the indicated problems. However, it still provides for reasonable results that resemble those of the related experiments.

As described, the method comprises a phase-field model being modified and coupled to a simulated thermal gradient. This helps to achieve result which are close to reality for crystal growth during solidification in powder-bed manufacturing.

The microstructural simulation basically comprises three steps. At first (cf. above description), it simulates the grain growth of single melt pool created by a one-pass-scanning of the (laser) beam. The second step is a multi-track simulation which accounts for the remelting of solidified tracks. Finally, the multi-layer steps allow tracks to be modelled on top of each other.

The proposed methodology is completely flexible and can be applied to various materials for the purposes of grain growth simulation in the LPBF-process.

The proposed model may further be implemented in any kind of software architecture and e.g. as a stand-alone package. The initial thermal gradient may e.g. be provided by any kind of heat-source simulation.

### References:

[1] R. Acharya, J.A. Sharon, A. Staroselsky, Prediction of microstructure in laser powder bed fusion process, Acta Mater. 124 (2017) 360-371. doi:10.1016/j.actamat.2016.11.018.
[2] T.M. Rodgers, J.D. Madison, V. Tikare, Simulation of metal additive manufacturing microstructures using kinetic Monte Carlo, Comput. Mater. Sci. 135 (2017) 78-89. doi:10.1016/j.commatsci.2017.03.053.
[3] X. Li, W. Tan, Numerical investigation of effects of nucleation mechanisms on grain structure in metal additive manufacturing, Comput. Mater. Sci. 153 (2018) 159-169. doi:10.1016/j.commatsci.2018.06.019.
[4] O. Zinovieva, A. Zinoviev, V. Ploshikhin, Three-dimensional modeling of the microstructure evolution during metal additive manufacturing, Comput. Mater. Sci. 141 (2018) 207-220. doi:10.1016/j.commatsci.2017.09.018.
[5] J. Li, X. Zhou, M. Brochu, N. Provatas, Y.F. Zhao, Solidification microstructure simulation of Ti-6Al-4V in metal additive manufacturing: A review, Addit. Manuf. 31 (2020) 100989. doi:10.1016/j.addma.2019.100989.
[6] R. Kobayashi, Modeling and numerical simulations of dendritic crystal growth, Phys. D Nonlinear Phenom. 63 (1993) 410-423. doi:10.1016/0167-2789(93)90120-P.
[7] J. A. Warren W, J. Boettinger, Prediction of dendritic growth and microsegregation patterns in a binary alloy using the phase-field method, Acta Mater, 43 (1996) 689-703. doi:10.1016/0956-7151(94)00285-P.

## Claims

1. A method of simulating solidification of a build material (1) in a powder-bed-based additive manufacturing process, comprising:
- applying a finite element model (FE) to calculate an initial thermal gradient (ΔT) and a melt pool (M) geometry in the build material (1),
- applying a phase-field model (PF) being coupled to a modelling of a thermal gradient further evolving in the build material (1), wherein the phase field model (PF) simulates:
- (i) a structural grain formation (g) in the build material (1) out of a melt pool (M) created by a single track (T) irradiation, and
- (ii) remelting of a structure (10) of the build material (1) created from a plurality of irradiation tracks (Tₙ).

2. Method according to claim 1, wherein the finite element model (FE) applied to calculate the initial thermal gradient (ΔT) and the melt pool geometry is a three-dimensional microscale model.

3. Method according to claim 1 or 2, wherein the initial thermal gradient (ΔT) is calculated from a thermal simulation of a cross-section of a heat source (5) with the build material (1).

4. Method according to claim 3, wherein the heat source simulation is imported to the phase-field model (PF) as an input to the simulation.

5. Method according to one of the previous claims, wherein the phase-field model (PF) is coupled to the thermal gradient modelling in order to simulate competitive grain growth (g(x,y,z)) and/or a final grain structure of the build material (1).

6. Method according to one of the previous claims, wherein the phase-field model (PF) comprises simulating a microstructure of the build material (1) from a plurality of layers (Lₙ), each of the layers (Lₙ) comprising a plurality of tracks (Tₙ), stacked on top of each other.

7. Method according to one of the previous claims, wherein the method of simulating is a transient analysis.

8. A computer program product (CP) comprising instructions which, when the program is executed by a computer, data processing device or build processor (4), cause said means to carry out the method of simulating of one of claims 1 to 7.

9. Apparatus (4) being configured to carry out the method of simulating of one of claims 1 to 7.
